# EUROPÄISCHE PATENTANMELDUNG

(11) **EP 1 484 259 A1**
(43) Veröffentlichungstag der Anmeldung: **08.12.2004**
(21) Anmeldenummer: 03405406.4
(22) Anmeldetag: 04.06.2003
(51) Int. Cl.: B65D 77/20, B65D 65/40, B65B 7/28, B32B 27/20

(54) **Verbundfolie zum Verschliessen eines Glasbehälters**

(71) Anmelder: Alcan Technology & Management Ltd., 8212 Neuhausen am Rheinfall (CH)
(72) Erfinder: Nägeli, Hans-Rudolf, 8212 Neuhausen (CH); Hombach, Franz Peter, 8222 Beringen (CH); Kolb, Franz, 78239 Rielasingen (DE); Santoro, Salvatore, 78333 Stockach (DE)

(57) **Zusammenfassung**

Eine Verbundfolie zum Verschliessen eines Glasbehälters (10) weist eine Deckelschicht (20) aus einem flexiblen Material, eine gegen Glas siegelbare Siegelschicht (28) aus einem thermoplastischen Kunststoff und eine zwischen der Deckelschicht (20) und der Siegelschicht (28) angeordnete, kohäsiv brechende Trennschicht (26) aus einem thermoplastischen Kunststoff auf.

## Beschreibung

Die Erfindung betrifft eine Verbundfolie zum Verschliessen eines Glasbehälters. Im Rahmen der Erfindung liegt auch ein Verfahren zur Herstellung der Verbundfolie und ein Glasbehälter mit einem eine Einfüll- und Entnahmeöffnung begrenzenden Behälterrand und mit einer mit dem Behälterrand verbundenen und von diesem peelbaren Verschlussmembran aus der Verbundfolie.

Bei bekannten Behältern aus Glas mit Membranverschluss wird die beispielsweise aus einer Aluminiumfolie bestehende Verschlussmembran mittels Nassklebern oder Hotmelt mit dem Behälterrand verbunden. Zum Öffnen des Glasbehälters wird die Verschlussmembran durch Ziehen an einer Aufreisslasche vom Behälterrand gelöst. Mit Hotmelt lässt sich eine optimale Peel- oder Schälkraft einstellen. Peelbare Verschlussmembranen für Glasbehälter sind heute überwiegend mit Hotmelt beschichtete Aluminiumfolien. Hotmelt ist jedoch verhältnismässig teuer und zudem zur Verarbeitung auf Thermoplaste verarbeitenden Anlagen ungeeignet.

Der Erfindung liegt die Aufgabe zugrunde, eine als Verschlussmembran für einen Glasbehälter geeignete Verbundfolie mit vergleichbarer Peelkraft und vergleichbaren Eigenschaften bezüglich der Dichtigkeit der Siegelverbindung zu schaffen. Ein wesentliches Ziel der Erfindung ist die gleichzeitige Bereitstellung einer leicht erkennbaren Erstöffnungsgarantie.

Zur erfindungsgemässen Lösung der Aufgabe führt, dass die Verbundfolie eine Deckelschicht aus einem flexiblen Material, eine Siegelschicht aus einem thermoplastischen Kunststoff und eine zwischen der Deckelschicht und der Siegelschicht angeordnete kohäsiv brechende Trennschicht aus einem thermoplastischen Kunststoff aufweist.

Beim Lösen einer aus der erfindungsgemässen Verbundfolie hergestellten und gegen den Öffnungsrand eines Glasbehälters gesiegelten Verschlussmembran erfolgt die Materialtrennung innerhalb der kohäsiv brechenden Trennschicht, die zu einem Teil auf dem Öffnungsrand des Glasbehälters in der Form eines gleichmässigen weissen Belages zurückbleibt. Der gleichmässig weisse Belag dient als charakteristischer "Footprint" der sofortigen Erkennung gefälschter oder manipulierter Verpackungen und kann somit als Erstöffnungsgarantie eingesetzt werden.

Die Deckelschicht ist beispielsweise eine Aluminiumfolie, ein Polyesterfilm, eine Schicht aus Papier oder ein aus wenigstens zwei dieser Materialien gebildetes Laminat.

Die Siegelschicht besteht bevorzugt aus einem Ethylen/Acrylsäure/Zink oder Natrium lonomer oder einem Zinkacrylat Terionomer, wobei ein unter der Markenbezeichnung Surlyn 1857 bekanntes Produkt besonders bevorzugt ist.

Eine besonders bevorzugte kohäsiv brechende Trennschicht besteht aus Polyethylen mit einem Zusatz von Talk. Bevorzugt enthält die Trennschicht etwa 10 bis 60 Gew.-%, insbesondere etwa 30 bis 50 Gew.-% Talk.

Ein wesentliches Kriterium der erfindungsgemässen Folie ist deren kostengünstige Herstellbarkeit durch eine zwei- oder dreischichtige Coextrusion der Siegelschicht, der Trennschicht und ggf. einer Haftschicht, wobei das Coextrudat bevorzugt unmittelbar nach dem Extrusionsvorgang mit der Deckelschicht zur erfindungsgemässen Folie zusammengeführt wird. Eine bevorzugte Haftschicht besteht aus einem Polyethylen Copolymer, insbesondere einem Ethylen/Acrylsäure Copolymer, oder einem lonomer, insbesondere einem Natriumoder Zinkacrylat Co- oder Terionomer, vorzugsweise aus Surlyn 1857.

Bei einer zweischichtigen Coextrusion der Trennschicht und der Siegelschicht kann es sich als vorteilhaft erweisen, die Deckelschicht vorgängig mit einem Haftprimer zu versehen. Ein geeigneter Haftprimer ist beispielsweise eine Copolymer aus Ethylen und Acrylsäure.

### Beispiel

Eine erfindungsgemässe Verbundfolie mit der Schichtfolge

| | |
|---|---|
| 20 µm | Aluminiumfolie |
| 3 µm | Surlyn 1857 |
| 20 µm | LDPE mit 40 Gew.-% Talk |
| 3 µm | Surlyn 1857 |

und als Vergleichsbeispiel eine zur Herstellung von Verschlussmembranen auf Glasbehältern handelsübliche Verbundfolie aus einer 20 µm dicken Aluminiumfolie mit einer Hotmelt-Beschichtung wurden einem Peeltest unterworfen. Die Verbundfolien wurden bei einem Siegeldruck von etwa 4 kg mit einer Siegelzeit von ca. 1 Min bei unterschiedlichen Siegeltemperaturen in der Form 15 mm breiter Streifen gegen eine Glasoberfläche gesiegelt.

Als Mass für die Siegelnahtfestigkeit wurde die zum Ablösen der Streifen von der Glasunterlage erforderliche Kraft bestimmt. Der Abzugwinkel der Streifen gegen die auf einem Schlitten verfahrbare Glasoberfläche betrug jeweils 90°. Als Vergleichsbeispiel diente eine handelsübliche Verschlussmembran aus einer 20 µm dicken Aluminiumfolie mit einer Hotmelt-Beschichtung.

Die Ergebnisse des Peeltests sind in der nachfolgenden Tabelle zusammengestellt. Die Verbundfolie mit dem erfindungsgemässen Aufbau und die Membranfolie nach dem Stand der Technik zeigen vergleichbare Peelkräfte bzw. Siegelnahtfestigkeiten. Der als Footprint auf dem Behälterrand zurückbleibende Belag war in allen untersuchten Fällen weiss.

Die in der Tabelle zusammengefassten Ergebnisse zeigen, dass mit dem erfindungsgemässen Aufbau einer Verschlussmembran Siegelnahtfestigkeiten eingestellt werden können, die bei vergleichbarer Peel- oder Schälkraft zum gleichen Erscheinungsbild eines Footprint führen wie eine handelsübliche Verschlussmembran mit Hotmelt-Beschichtung.

| | **Verbundfolie Al 20µm, Hotmelt** | | **Erfindungsgemässe Verbundfolie** | |
|---|---|---|---|---|
| Siegeltemperatur | Peelkraft [N/15mm] | Footprint | Peelkraft [N/15mm] | Footprint |
| 130°C | 3,4 | weiss | 4,0 | weiss |
| 160°C | 3,2 | weiss | 4,6 | weiss |
| 190°C | 3,2 | weiss | 5,1 | weiss |
| 210°C | 3,2 | weiss | 5,4 | weiss |

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 einen Querschnitt durch einen Teil eines Glasbehälters mit Verschlussmembran und aufgesetztem Schraubdeckel;
- Fig. 2 eine Schrägsicht auf die in Fig. 1 gezeigte Anordnung nach Entfernung des Schraubdeckels und mit teilweise gelöster Verschlussmembran;
- Fig. 3 einen Querschnitt durch eine erste Ausführungsform einer Verbundfolie für eine Verschlussmembran;
- Fig. 4 einen Querschnitt durch eine zweite Ausführungsform einer Verbundfolie für eine Verschlussmembran.

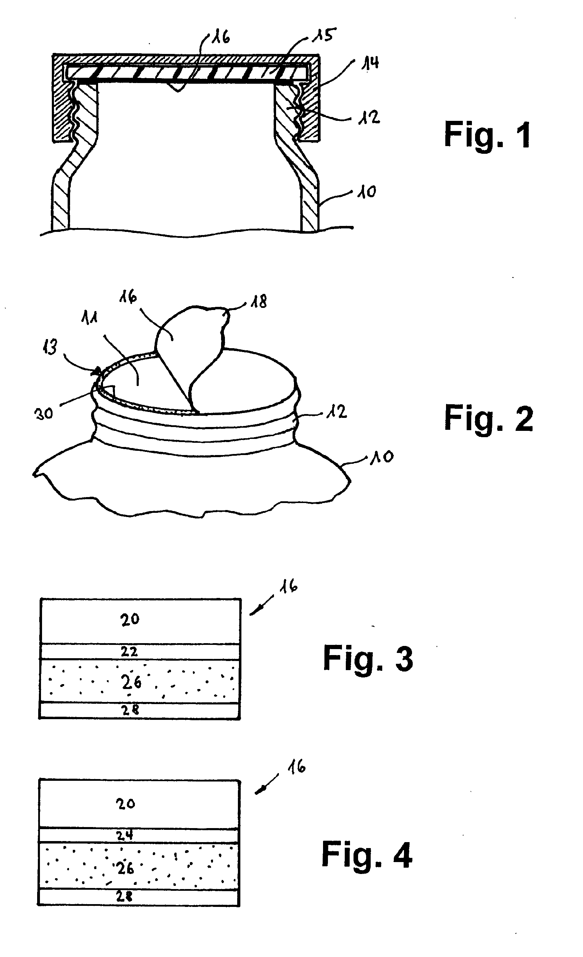

Ein in Fig. 1 dargestellter Behälter 10 aus Glas ist mit einem beispielsweise aus Kunststoff gefertigten und auf einen Behälterhals 12 geschraubten Schraubdeckel 14 mit einer Karton- oder Kunststoffeinlage 15 versehen.

Wie aus Fig. 2 hervorgeht, begrenzt der Behälterhals 12 eine Behälteröffnung 11, die im ungeöffneten Zustand des Behälters 10 von einer Verschlussmembran 16 abgedeckt ist. Hierbei ist die Verschlussmembran 16 gegen den das freie Ende des Behälterhalses 12 bildenden ringförmigen Behälterrand 13 gesiegelt.

Zum Öffnen des Behälters 10 wird zunächst der Schraubdeckel 14 durch Drehen entfernt. Anschliessend wird die Verschlussmembran 16 durch Ziehen an einer über den Behälterrand 13 hinausragenden Aufreisslasche 18 in die Gegenrichtung und von der Behälteröffnung 11 weg vom Behälterrand 13 gelöst, wodurch die Behälteröffnung 11 zur Entnahme von Füllgut freigelegt wird. Beim erstmaligen Öffnen des Glasbehälters 10 wird die Verschlussmembran 16 vollständig vom Öffnungsrand 13 abgetrennt. Zum Wiederverschliessen des Glasbehälters 10 wird ausschliesslich der Schraubdeckel 14 verwendet.

Eine in Fig. 3 gezeigte Verschlussmembran 16 weist eine flexible Deckelschicht 20 auf, die über eine Haftschicht 22 mit einer Trennschicht 26 verbunden ist. An die Trennschicht 26 schliesst eine Siegelschicht 28 an.

Die Deckelschicht 20 ist beispielsweise eine Aluminiumfolie mit einer Dicke von 10 bis 50 µm. Die Trennschicht 26 besteht beispielsweise aus einem Polyethylen niedriger Dichte (LDPE) mit einem Gewichtsanteil von 10 bis 60% Talk. Die Dicke der Trennschicht liegt etwa zwischen 15 und 35 µm. Die auf je einer Seite der Trennschicht 26 angeordnete Haftschicht 22 bzw. Siegelschicht 28 weist eine Dicke von beispielsweise 3 bis 5 µm auf und besteht bevorzugt aus Surlyn 1857.

Die in Fig. 3 gezeigte Verschlussmembran 1 6 wird auf einfache u nd kostengünstige Weise durch Coextrusion der Haftschicht 22, der Trennschicht 26 und der Siegelschicht 28 und Zusammenführen mit der Deckelschicht 20 hergestellt. Die Haftschicht 22 dient der Verbindung der Trennschicht 26 mit der Deckelschicht 20, die Siegelschicht 28 der Verbindung der Trennschicht 26 mit dem Öffnungsrand 13 des Glasbehälters 10. Das beispielhaft angegebene Surlyn 1857 weist eine ausgezeichnete Haftung sowohl gegenüber Aluminium als auch gegenüber Glas auf.

Der Aufbau der in Fig. 4 gezeigten Verschlussmembran unterscheidet sich von der Verschlussmembran gemäss Fig. 3 dadurch, dass anstelle der Haftschicht 22 ein Haftprimer 24 aus beispielsweise einem Ethylen/Acrysäure-Copolymer besteht, das vorgängig in Form einer Lösung auf die Deckelschicht 20 aufgetragen wird. Die Herstellung der Verschlussmembran 16 erfolgt in diesem Falls durch Coextrusion der Trennschicht 26 und der Siegelschicht 28 und Zusammenführen des Extrudates mit der Deckelschicht 20. Der Haftprimer 24 dient hier der verbesserten Haftung der Trennschicht 26 an der Deckelschicht 20.

Beim Lösen der gegen den Rand 13 des Glasbehälters 10 gesiegelten Verschlussmembran 16 durch Ziehen an der Aufreisslasche 18 erfolgt die Materialtrennung im Innern der Trennschicht 26. Nach dem vollständigen Entfernen der Verschlussmembran 16 zur erstmaligen Freigabe der Behälteröffnung 11 bleibt ein Teil der Trennschicht 26 als gleichmässiger Belag auf dem Behälterrand 13 zurück. Dieser Belag oder Footprint 30 wird als einfacher und ohne weitere Hilfsmittel erkennbarer Hinweis auf eine Originalpackung mit Erstöffnungsgarantie verwendet.

## Patentansprüche

1. Verbundfolie zum Verschliessen eines Glasbehälters (10),
**gekennzeichnet durch**
eine Deckelschicht (20) aus einem flexiblen Material, eine gegen Glas siegelbare Siegelschicht (28) aus einem thermoplastischen Kunststoff und
eine zwischen der Deckelschicht (20) und der Siegelschicht (28) angeordnete, kohäsiv brechende Trennschicht (26) aus einem thermoplastischen Kunststoff.

2. Verbundfolie nach Anspruch 1, **dadurch gekennzeichnet, dass** die Deckelschicht (20) eine Aluminiumfolie, ein Polyesterfilm, eine Schicht aus Papier oder ein aus wenigstens zwei dieser Materialien gebildetes Laminat ist.

3. Verbundfolie nach Anspruch 1 oder 2, **dadurch gekennzeichnet, dass** die Siegelschicht (28) aus einem Ethylen/Acrylsäure/Zink oder Natrium lonomer oder einem Zinkacrylat Terionomer, besteht.

4. Verbundfolie nach einem der Ansprüche 1 bis 3, **dadurch gekennzeichnet, dass** die kohäsiv brechende Trennschicht (26) aus Polyethylen mit einem Zusatz von Talk besteht.

5. Verbundfolie nach Anspruch 4, **dadurch gekennzeichnet, dass** der Talkanteil 10 bis 60 Gew.-%, vorzugsweise 30 bis 50 Gew.-% der kohäsiv brechenden Trennschicht (26) beträgt.

6. Verbundfolie nach einem der Ansprüche 1 bis 5, **dadurch gekennzeichnet, dass** zwischen der Deckelschicht (20) und der kohäsiv brechenden Trennschicht (26) eine Haftschicht (22) oder ein Haftprimer (24) angeordnet ist.

7. Verbundfolie nach Anspruch 6, **dadurch gekennzeichnet, dass** die Haftschicht (22) aus einem Polyethylen Copolymer, insbesondere einem Ethylen/Acrylsäure Copolymer, oder einem lonomer, insbesondere einem Natrium- oder Zinkacrylat Co- oder Terionomer, besteht.

8. Verbundfolie nach Anspruch 6, **dadurch gekennzeichnet, dass** der Haftprimer (24) aus einem Ethylen/Acrylsäure Copolymer besteht.

9. Verfahren zur Herstellung einer Verbundfolie nach einem der Ansprüche 1 bis 8, **dadurch gekennzeichnet, dass** die Trennschicht (26), die Siegelschicht (28) und die ggf. vorhandene Haftschicht (22) coextrudiert und mit der Deckelschicht (20) verbunden werden.

10. Verfahren zur Herstellung einer Verbundfolie nach einem der Ansprüche 1 bis 8, **dadurch gekennzeichnet, dass** die Trennschicht (26) und die Siegelschicht (28) coextrudiert mit der ggf. mit dem Haftprimer (24) beschichteten Deckelfolie (20) verbunden werden.

11. Glasbehälter (10) mit einem eine Einfüll- und Entnahmeöffnung (11) begrenzenden Behälterrand (13) und mit einer mit dem Behälterrand (13) verbundenen und von diesem peelbaren Verschlussmembran (16) aus einer Verbundfolie, **dadurch gekennzeichnet, dass** die Verbundfolie eine Deckelschicht (20) aus einem flexiblen Material, eine gegen den Behälterrand (13) gesiegelte Siegelschicht (28) aus einem thermoplastischen Kunststoff und eine zwischen der Deckelschicht (20) und der Siegelschicht (28) angeordnete, kohäsiv brechende Trennschicht (26) aus einem thermoplastischen Kunststoff aufweist.

12. Glasbehälter nach Anspruch 11, **dadurch gekennzeichnet, dass** die Deckelschicht (20) eine Aluminiumfolie, ein Polyesterfilm, eine Schicht aus Papier oder ein aus wenigstens zwei dieser Materialien gebildetes Laminat ist.

13. Glasbehälter nach Anspruch 11 oder 12, **dadurch gekennzeichnet, dass** die Siegelschicht (28) aus einem Ethylen/Acrylsäure/Zink oder Natrium lonomer oder einem Zinkacrylat Terionomer, besteht.

14. Glasbehälter nach einem der Ansprüche 11 bis 13, **dadurch gekennzeichnet, dass** die kohäsiv brechende Trennschicht (26) aus Polyethylen mit einem Zusatz von Talk besteht.

15. Glasbehälter nach Anspruch 14, **dadurch gekennzeichnet, dass** der Talkanteil 10 bis 60 Gew.-%, vorzugsweise 30 bis 50 Gew.-% der kohäsiv brechenden Trennschicht (26) beträgt.

16. Glasbehälter nach einem der Ansprüche 11 bis 15, **dadurch gekennzeichnet, dass** zwischen der Deckelschicht (20) und der kohäsiv brechenden Trennschicht (26) eine Haftschicht (22) oder ein Haftprimer (24) angeordnet ist.

17. Glasbehälter nach Anspruch 16, **dadurch gekennzeichnet, dass** die Haftschicht (22) aus einem Polyethylen Copolymer, insbesondere einem Ethylen/Acrylsäure Copolymer, oder einem lonomer, insbesondere einem Natrium- oder Zinkacrylat Co- oder Terionomer, besteht.

18. Glasbehälter nach Anspruch 16, **dadurch gekennzeichnet, dass** der Haftprimer (24) aus einem Ethylen/Acrylsäure Copolymer besteht.

19. Glasbehälter nach Anspruch 18, **dadurch gekennzeichnet, dass** die Deckelschicht (20) eine Aluminiumfolie, ein Polyesterfilm, eine Schicht aus Papier oder ein aus wenigstens zwei dieser Materialien gebildetes Laminat ist.

20. Glasbehälter nach Anspruch nach Anspruch 18 oder 19, **dadurch gekennzeichnet, dass** die Siegelschicht (28) aus einem Ethylen/Acrylsäure/Zink oder Natrium lonomer oder einem Zinkacrylat Terionomer, besteht.

21. Glasbehälter nach einem der Ansprüche 18 bis 20, **dadurch gekennzeichnet, dass** die kohäsiv brechende Trennschicht (26) aus Polyethylen mit einem Zusatz von Talk besteht.

22. Glasbehälter nach Anspruch 21, **dadurch gekennzeichnet, dass** der Talkanteil 10 bis 60 Gew.-%, vorzugsweise 30 bis 50 Gew.-% beträgt.

23. Verschlussmembran nach einem der Ansprüche 18 bis 22, **dadurch gekennzeichnet, dass** zwischen der Deckelschicht (20) und der kohäsiv brechenden Trennschicht (26) eine Haftschicht (22) oder ein Haftprimer (24) angeordnet ist.

24. Glasbehälter nach Anspruch 23, **dadurch gekennzeichnet, dass** die Haftschicht (22) aus einem Polyethylen Copolymer, insbesondere einem Ethylen/Acrylsäure Copolymer, oder einem Ionomer, insbesondere einem Natrium- oder Zinkacrylat Co- oder Terionomer, besteht.

25. Glasbehälter nach Anspruch 23, **dadurch gekennzeichnet, dass** der Haftprimer (24) aus einem Ethylen/Acrylsäure Copolymer besteht.
